# NEUE EUROPÄISCHE PATENTSCHRIFT

(11) **EP 2 691 714 B2**
(45) Veröffentlichungstag und Bekanntmachung des Hinweises auf die Entscheidung über den Einspruch: **17.04.2019**
(45) Hinweis auf die Patenterteilung: 01.10.2014
(21) Anmeldenummer: 12708002.6
(22) Anmeldetag: 05.03.2012
(51) Int. Cl.: F25D 23/02

(54) **KÄLTEGERÄT MIT INTERNER KLAPPE**
REFRIGERATOR WITH AN INTERNAL FLAP
APPAREIL FRIGORIFIQUE DOTÉ D'UN ABATTANT INTERNE

(30) Priorität: 28.03.2011 DE 102011006231
(43) Veröffentlichungstag der Anmeldung: 05.02.2014
(73) Patentinhaber: BSH Hausgeräte GmbH, 81739 München (DE)
(72) Erfinder: BAUMANN, Christian, 89441 Obermedlingen (DE); KÜMMEL, Roland, 89191 Nellingen (DE); SPAAG, Rainer, 73479 Ellwangen-Röhlingen (DE)
(86) Internationale Anmeldenummer: PCT/EP2012/053744
(87) Internationale Veröffentlichungsnummer: WO 2012/130561

(56) Entgegenhaltungen:
- WO-A2-2007/129170
- DE-A1-102008 035 926
- DE-A1-102008 044 133

## Beschreibung

Die vorliegende Erfindung betrifft ein Kältegerät, insbesondere ein Haushaltskältegerät, mit den Merkmalen nach dem Oberbegriff des Anspruchs 1. Ein gattungsgemäßes Kaltegerät ist z.B. aus WO 2007/090695 A2 bekannt.

Ein Problem dieses bekannten Kältegerätes ist, dass in einer offenen Stellung der Klappe diese über den Korpus des Kältegerätes hinaus nach vorn vorspringt und mit der Tür des Kältegerätes kollidiert, wenn diese unachtsamerweise bei offener Klappe geschlossen wird. Bei einer solchen Kollision können erhebliche Kräfte auf das Scharnier der Klappe einwirken, mit der Folge, dass Teile brechen und ersetzt werden müssen.

Aufgabe der Erfindung ist, ein Kältegerät zu schaffen, das inhärent eine verbesserte Betriebssicherheit aufweist.

Die Aufgabe wird mit den Merkmalen des Anspruchs 1 gelöst. Da Dank dieser Anordnung der Achse eine darunterliegende Klappe oder Frontplatte eines darunterliegenden Fachs die Bewegung der schwenkbaren Klappe kaum behindert, ist eine große Schwenkbewegungsfreiheit der Klappe erreichbar, die vorzugsweise wenigstens 180° betragen sollte. Ein Überstand der offenen Klappe, der beim Schließen der Tür zur Beschädigung führen kann, kann so vermieden werden.

Wenn in einer offenen Anschlagstellung der Klappe wenigstens ein achsferner Bereich ihrer vorderen Oberfläche einen Anschlag berührt, kann die Klappe notfalls Druck der Tür aufnehmen und ihn nur in geringem Umfang oder gar nicht an das Scharnier weitergeben. So ist das Scharnier vor Beschädigung geschützt.

Ein solcher Anschlag kann insbesondere durch eine ein zweites, tiefer liegendes Fach der Lagerkammer begrenzende vordere Wandung gebildet sein. Eine solche vordere Wandung kann insbesondere eine weitere, in analoger Weise wie oben beschriebene Klappe schwenkbare Klappe oder auch die Frontseite eines Auszugskastens sein.

Erfindungsgemäss ist die Achse festgelegt durch zwei ineinander greifende Scharnierteile, von denen jeweils das eine an der Klappe und das andere an einem an einer Innenwand der Lagerkammer befestigten Adapter gebildet ist. Die Verwendung des Adapters trägt zum einen dazu bei, die Fertigung der Innenwand einfach zu halten, insbesondere kann diese einen in an sich bekannter Weise durch Tiefziehen geformten Innenbehälter umfassen. Des Weiteren kann, falls es durch unsachgemäße Behandlung doch zu einer Beschädigung des Scharniers kommt, der Adapter relativ unproblematisch entfernt und ausgetauscht werden.

Um ein Einhängen der Klappe in das Kältegerät zu ermöglichen, ist das Scharnierteil des Adapters vorzugsweise in Richtung der Achse elastisch auslenkbar. Da beim bestimmungsgemäßen Gebrauch der Klappe im Wesentlichen nur radial zur Achse orientierte Kräfte auf die Klappe einwirken, ist ein unbeabsichtigtes Aushängen der Klappe so im Wesentlichen ausgeschlossen.

Zu seiner Befestigung an der Innenwand weist der Adapter vorzugsweise eine Nut auf, die auf eine an der Innenwand geformte Rippe aufsteckbar ist.

Vorzugsweise ist der Adapter auf die Rippe in deren Längsrichtung, d.h. in Tiefenrichtung der Lagerkammer, geführt aufsteckbar. Dank dieser Führung braucht die Rippe nicht weit in die Lagerkammer hinein vorzuspringen, um dem Adapter einen sicheren Halt zu bieten.

Um den Adapter sicher zu verankern, ist es ferner zweckmäßig, wenn dieser einen in einer Aussparung der Innenwand einrastbaren Vorsprung aufweist.

Eine über die Oberseite der Rippe aufragende Anschlagfläche des Adapters kann ferner dazu dienen, eine Bodenplatte des durch die Klappe verschließbaren Fachs in der Lagerkammer zu fixieren.

Wenn die Anschlagfläche den Boden einer zur Rückwand des Korpus hin offenen Aussparung bildet, ist die Bodenplatte, wenn sie in die Aussparung eingreift, auch in vertikaler Richtung gesichert.

Eine über eine Unterseite der Rippe nach unten vorspringende Anschlagfläche kann zweckmäßigerweise die Bewegungsfreiheit eines unterhalb des Fachs angeordneten Auszugkasten begrenzen und verhindern, dass dieser versehentlich vollständig aus der Lagerkammer herausgezogen wird.

Vorzugsweise ist diese nach unten vorspringende Anschlagfläche zur Tür hin abschüssig. So teilt sich im Falle des Anschlagens eines Auszugskastens gegen die Anschlagfläche die resultierende Kraft in eine horizontale Komponente, die vorzugsweise über den elastischen Vorsprung in die Aussparung der Innenwand abgeleitet wird, und eine vertikal nach oben gerichtete Komponente auf, die von der Rippe aufgefangen werden kann.

Für eine Verteilung der Anschlagkräfte auf die Rippe und die Aussparung der Innenwand ist es zweckmäßig, wenn die Anschlagfläche Teil eines Verbindungsabschnitts zwischen der Nut und dem einrastbaren Vorsprung ist.

Der Adapter kann ferner eine Rastnase aufweisen, die in der geschlossenen Stellung der Klappe in eine nach unten offene Rastaussparung der Klappe eingreift, um sie in der geschlossenen Stellung lösbar zu fixieren.

Weitere Merkmale und Vorteile der Erfindung werden deutlich anhand der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: einen schematischen Schnitt durch ein erfindungsgemäßes Kältegerät mit geschlossener Klappe;
- Fig. 2: einen zu Fig. 1 analogen Schnitt mit offener Klappe;
- Fig. 3: eine perspektivische Detailansicht des erfindungsgemäßen Kältegerätes bei geschlossener Klappe;
- Fig. 4: eine perspektivische auseinandergezogene Ansicht des Adapters und einer Ecke der Klappe;
- Fig. 5: einen partiellen Schnitt durch die Klappe und ihre Umgebung in geschlossener Stellung; und
- Fig. 6: einen zu Fig. 5 analogen Schnitt durch die Klappe in offener Stellung.

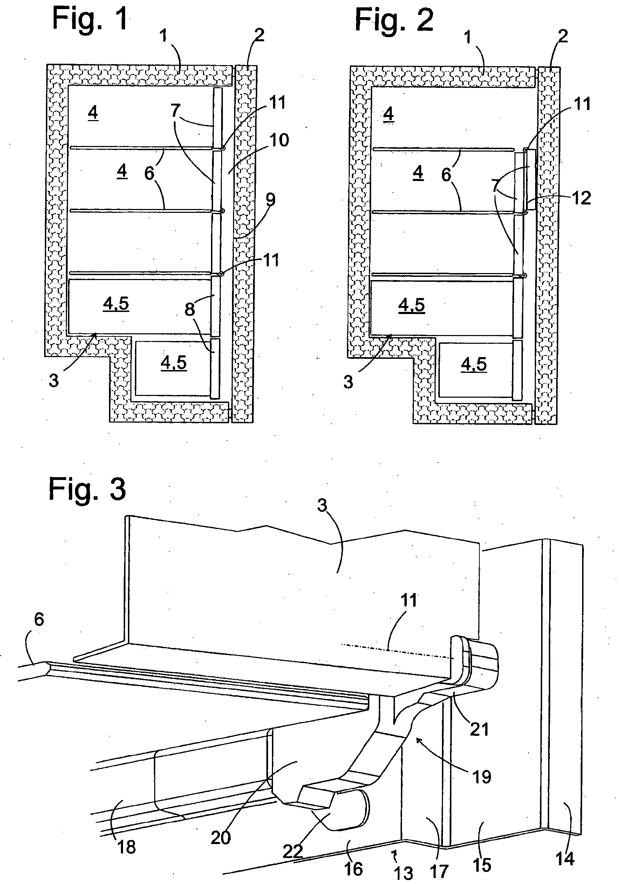

Fig. 1 zeigt einen schematischen Schnitt durch ein Haushaltskältegerät wie etwa einen Gefrierschrank mit einem Korpus 1 und einer Tür 2, die eine in mehrere Fächer 4 unterteilte Lagerkammer 3 umschließen. Die unteren dieser Fächer 4 enthalten jeweils einen Auszugkasten 5, während die oberen jeweils durch einen Fachboden 6 nach unten begrenzt sind und an ihrer Vorderseite durch eine Klappe 7 verschließbar sind. Zwischen den Klappen 7 und Frontplatten 8 der Auszugkästen 5 einerseits und einer Innenfläche 9 der Tür 2 andererseits erstreckt sich ein Kanal 10 über die gesamte Höhe der Lagerkammer 3, in dem, z.B. angetrieben durch einen nicht dargestellten Ventilator eines Nofrost-Verdampfers, Luft vertikal zirkulieren und für einen Temperaturausgleich zwischen den Fächern sorgen kann. Alternativ können auch die Fachböden 6 in an sich bekannter Weise als Verdampfer, insbesondere als Drahtrohrverdampfer, ausgebildet sein.

Eine Achse 11, um die die Klappen 7 schwenkbar sind, verläuft durch den Kanal 10 parallel zu den einander gegenüberliegenden Oberflächen der Klappen 7 und der Tür 2 oder unmittelbar entlang der an den Kanal 10 angrenzenden Oberflächen der Klappen 7. Diese Platzierung der Achse 11 ermöglicht es den Klappen 7, eine gegenüber der geschlossenen Stellung um 180° geschwenkte offene Stellung anzunehmen, in der, wie in Fig. 2 zu sehen, die offene Klappe 7 unmittelbar vor einer geschlossenen Klappe 7 oder einer Frontplatte 8 herabhängt. Die Tiefe des Kanals 10 kann ausreichend bemessen sein, um die Klappen 7 in ihrer offenen Stellung bei geschlossener Tür aufzunehmen. Eine Beschädigung der Klappen 7 und ihrer Aufhängung im Kältegerät durch versehentliches Schließen der Tür 2 bei offener Klappe ist dann mit Sicherheit ausgeschlossen.

Wie in Fig. 2 zu erkennen, behindert eine bei geschlossener Tür 2 offene Klappe 7 die Luftzirkulation im Kanal 10. Um eine gleichmäßige Kühlung in der gesamten Lagerkammer 3 zu gewährleisten, ist es daher wünschenswert, einen länger andauernden Betrieb des Kältegerätes in der Konfiguration der Fig. 2 zu vermeiden. Dies kann geschehen, indem die Tiefe des Kanals 10 knapp nicht ausreicht, um ein Schließen der Tür 2 bei offener Klappe 7 zu ermöglichen. Wenn abweichend von der Darstellung der Fig. 2 die Innenfläche 9 beim Schließen der Tür 2 gegen die offene Klappe 7 stößt, wird diese über die in Fig. 2 gezeigte frei hängende Stellung hinaus geschwenkt, bis ein achsferner Bereich 12 der offenen Klappe 7 gegen die nächst tiefere Klappe 7 oder Frontplatte 8 stößt. Da die Tür 2 nahezu geschlossen ist, bevor sie gegen die offenen Klappe 7 stößt, verteilt sich ihr Druck im Wesentlichen gleichmäßig über die Breite der offenen Klappe 7, so dass rechte und linke Lager der Achse 11 im Wesentlichen gleichmäßig belastet sind, und der Kontakt des achsfernen Bereichs 12 mit der nächst tieferen Klappe 7 entlastet die Lager der offenen Klappe 7 weiter. So kann der Kontakt mit der offenen Klappe 7 ein Schließen der Tür 2 verhindern und den Benutzer daran erinnern, die Klappe zu schließen, ohne dass die Gefahr einer Beschädigung besteht.

Wenn die Aufhängung der Klappe 7 im Korpus 1 in Tiefenrichtung spielhaltig ist, kann die offene Klappe 7 unter dem Druck der Tür 2 auch parallel verschoben werden, bis sie flächig an einer Klappe 7 eines darunterliegenden Fachs 4 oder einer Frontplatte 8 anliegt.

Ein flächiger Kontakt zwischen der offenen Klappe und der nächsttieferen Klappe 7 oder Frontplatte 8 kann sich auch bereits vor dem Kontakt mit der Tür ergeben, wenn die Vorderseiten der Klappen 7 bzw. Frontplatten 8 in einer gleichen Ebene liegen und die Achse 11 in dieser Ebene verläuft.

Wenn die Innenfläche 9 der Tür 2 in an sich bekannter Weise aus Kunststoff tiefgezogen ist, ist sie in der Regel mit geringem Kraftaufwand in einem Bereich von wenigen Millimetern elastisch verformbar. Die Nachgiebigkeit der Türinnenfläche 9 kann so bemessen sein, dass zwar bei offener Klappe 7 die Tür 2 in die geschlossene Stellung gedrückt werden kann, dass dadurch aber die Türinnenfläche 9 in Kontakt mit der offenen Klappe 7 elastisch verformt wird, wobei die auftretende Verformungskraft groß genug ist, um die Tür 2 wieder aufzudrücken, aber nicht groß genug, um Schäden an den Lagern der Klappe 7 hervorzurufen.

Fig. 3 zeigt in einer perspektivischen Ansicht ein Lager einer der Klappen 7 sowie dessen Umgebung in einem erfindungsgemäßen Kältegerät. Das Kältegerät hat einen in üblicher Weise tiefgezogenen Innenbehälter, von dem ein Ausschnitt einer Seitenwand in Fig. 3 gezeigt und mit 13 bezeichnet ist. Die Seitenwand 13 geht an ihrem vorderen Rand in einen Rahmen 14 über, an dem in geschlossener Stellung der Tür 2 eine Dichtung der Tür 2 zu liegen kommt. Die Seitenwand 13 hat einen gestuften Verlauf mit einem vorderen und einem hinteren Abschnitt 15 bzw. 16, die sich jeweils in Tiefenrichtung der Lagerkammer 3 erstrecken, und einer sich im Wesentlichen in Breitenrichtung erstreckenden Schulter 17. An den hinterem Abschnitt 16 sind horizontale, in die Lagerkammer 3 hinein vorspringende Rippen 18 ausgeformt, die jeweils als Auflage für einen Fachboden 6 oder, in hier nicht figürlich dargestellter Weise, als Träger für Teleskopschienen eines Auszugskastens 4 dienen. Es versteht sich, dass die Rippen 18 jeweils paarweise an beiden Seitenwänden 13 der Lagerkammer vorgesehen sind. Die Rippen 18 weisen jeweils eine der Schulter 17 zugewandte Spitze auf, der in Fig. 3 durch einen darauf aufgesteckten Adapter 19 verborgen ist. Den Querschnitt dieser Spitze ist etwas kleiner als der des in Fig. 3 sichtbaren Teils der Rippe 18, damit Oberseiten der Rippe 18 und des Adapters 19 eine kontinuierliche, ebene Auflagefläche für den Fachboden 6 bilden können.

Der aus Kunststoff spritzgeformte Adapter 19 umfasst einen Grundkörper 20, der die Spitze der Rippe 18 aufnimmt, einen über die Schulter 17 nach vorn vorspringenden, sich beabstandet vom vorderen Abschnitt 15 der Seitenwand erstreckenden Finger 21, der ein Lager für die Klappe 7 trägt, sowie einen über die Unterseite der Rippe 18 nach unten vorspringenden Rastarm 22.

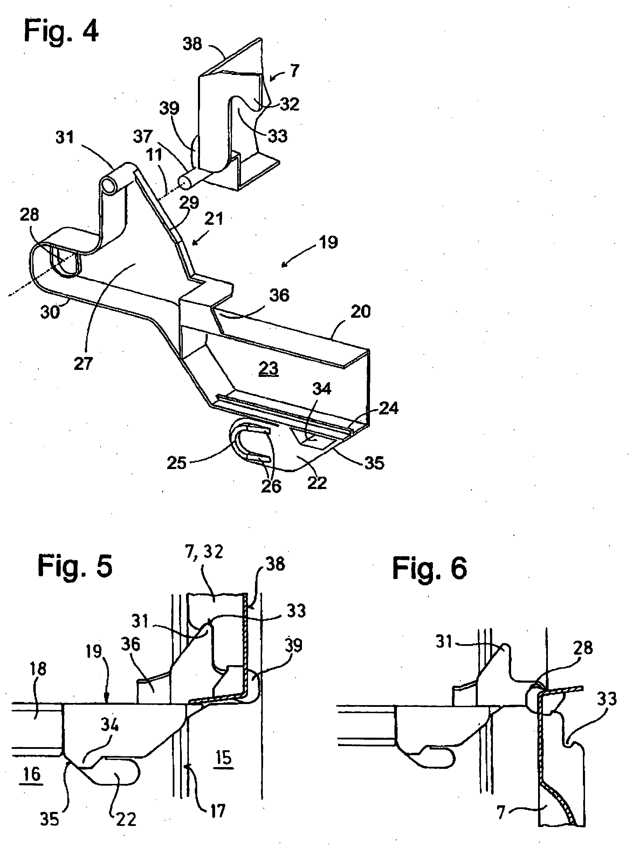

Fig. 4 zeigt eine perspektivische Ansicht des Adapters 19, gesehen von dessen der Seitenwand 13 zugewandter Seite her. Eine Nut 23, die die Spitze der - in Fig. 4 nicht sichtbaren - Rippe 18 aufnimmt, füllt den Grundkörper 20 größtenteils aus. An einer unteren Flanke der Nut 23 ist eine sich in deren Längsrichtung erstreckende Rippe 24 gebildet, die im montierten Zustand in eine komplementäre Nut an der Unterseite der Rippe 18 des Innenbehälters eingreift und so ein Aufschieben des Adapters 19 auf die Rippe 18 nur in Tiefenrichtung der Lagerkammer 3 erlaubt bzw. den Adapter in Breitenrichtung formschlüssig an der Rippe 18 fixiert. Der Rastarm 22 trägt an seiner der Seitenwand 13 zugewandten Flanke einen - hier hufeisenförmigen - Rastnocken 25 mit schrägen Flanken 26 die, wenn sie beim Aufschieben des Adapters 19 auf die Rippe 18 die Schulter 17 passieren, bewirken, dass der Rastarm 22 elastisch in die Lagerkammer 3 hinein ausgelenkt wird. Sobald die Spitze der Rippe 18 das Ende der Nut 23 erreicht hat, schnappt der Rastnocken in eine Rastvertiefung der Seitenwand 13 ein, so dass der Adapter 19 durch eine in Tiefenrichtung wirkende Kraft nicht mehr von der Rippe 18 abgezogen werden kann. In dem in Fig. 3 gezeigten verrasteten Zustand ist diese Rastvertiefung durch den Rastarm 22 verdeckt.

Der Finger 21 umfasst eine vertikale Wand 27, an deren Spitze ein vertikal langgestrecktes Loch 28 gebildet ist. Von den Rändern der Wand 27 aus springen Stege 29, 30 zur Seitenwand 13 hin vor, wobei die Breite der Stege 29, 30 bemessen ist, um eine elastische Auslenkung der Spitze des Fingers 21 in Breitenrichtung der Lagerkammer 3 zu erlauben. Diese Auslenkung ist notwendig, um nach dem Aufstecken von zwei Adaptern auf sich gegenüberliegende Rippen 18 der Seitenwände Korpus Achszapfen 37 einer Klappe 7 in die Löcher 28 der Adapter 19 einführen zu können. Indem die Achszapfen 37 an über eine Frontseite 38 der Klappe 7 überstehenden Armen 39 gebildet sind, positionieren sie die Schwenkachse 11 der Klappe vor deren Frontseite 38.

Die Achszapfen 37 können mit Spiel in Tiefenrichtung in die Löcher 28 eingreifen, um in der offenen Stellung der Klappe 7 eine Translationsbewegung der Klappe 7 zu ermöglichen, durch die diese, wie oben erwähnt, flächig in Anlage an der nächsttieferen Klappe 7 oder Frontplatte 8 gelangen kann.

Eine von der Oberseite des Fingers 21 aufragende Rastnase 31 dient der Arretierung der Klappe 7 in ihrer geschlossenen Stellung, wie in Fig. 5 deutlich wird. Diese Figur zeigt eine Ansicht des Adapters 19 aus seitlicher Richtung, vom Inneren der Lagerkammer 3 her, sowie einen partiellen Schnitt durch die an dem Adapter 19 aufgehängte Klappe 7 in ihrer geschlossenen Stellung. Eine Seitenwand 32 der Klappe 7 weist eine in der geschlossenen Stellung der Fig. 5 nach unten offene Rastaussparung 33 auf, die die Rastnase 31 formschlüssig umgreift. Dank der vertikal langgestreckten Form des Lochs 28 ist es möglich, die Klappe 7 soweit anzuheben, dass die Rastnase 31 aus der Rastaussparung 33 ausrückt und die Klappe 7 in die offene Stellung der Fig. 6 geschwenkt werden kann.

Wiederum bezogen auf Fig. 4 ist am Adapter 19 an der Basis des Rastarms 22 ein Hohlkörper 34 mit trapezförmigem Querschnitt gebildet. Eine zur Tür 2 hin abschüssige rückwärtige Flanke 35 dieses Hohlkörpers 34 kann, falls in dem Fach unterhalb des Adapters 19 ein Auszugkasten 5 untergebracht ist, als Anschlag für eine Rückwand des Auszugkastens 5 dienen, der verhindert, dass der Auszugkasten 4 unbeabsichtigt vollständig aus der Lagerkammer 3 herausgezogen wird.

Oberhalb der Nut 23 ist am Adapter 19 eine in Tiefenrichtung nach hinten, zur Rückwand des Korpus 1 hin und in seitlicher Richtung zur Mitte der Lagerkammer 3 hin offene Nische 36 gebildet, die vorgesehen ist, um eine vordere Ecke des Fachbodens 6 aufzunehmen. Durch den Eingriff in diese Nische 36 ist der Fachboden 6 sowohl in Tiefenrichtung als auch in der Vertikalen fixiert.

## Patentansprüche

1. Kältegerät, insbesondere Haushaltskältegerät, mit einem Korpus (1) und einer Tür (2), die eine Lagerkammer (3) begrenzen, und mit einer Klappe (7), wobei wenigstens ein Fach (4) der Lagerkammer (3) türseitig durch die um eine horizontale Achse (11) schwenkbare Klappe (7) verschließbar ist, wobei in geschlossener Stellung der Klappe (7) die Achse (11) zwischen der Tür (2) und einer der Tür (2) zugewandten vorderen Oberfläche (38) der Klappe (7) oder entlang der vorderen Oberfläche (38) der Klappe (7) verläuft, **gekennzeichnet durch** einen Adapter (19), wobei die Achse (11) festgelegt ist durch zwei ineinandergreifende Scharnierteile (28, 37), von denen jeweils das eine (37) an der Klappe (7) und das andere (28) an dem an einer Innenwand (13) der Lagerkammer (3) befestigten Adapter (19) gebildet ist.

2. Kältegerät nach Anspruch 1, **dadurch gekennzeichnet, dass** die Schwenkbewegungsfreiheit der Klappe (7) wenigstens 180° beträgt.

3. Kältegerät nach Anspruch 1 oder 2, **dadurch gekennzeichnet, dass** in einer offenen Anschlagstellung der Klappe (7) wenigstens ein achsferner Bereich (12) der vorderen Oberfläche einen Anschlag (7, 8) berührt.

4. Kältegerät nach Anspruch 3, **dadurch gekennzeichnet, dass** der Anschlag (7, 8) durch eine ein zweites Fach (4) der Lagerkammer (3) begrenzende vordere Wandung (7, 8) gebildet ist.

5. Kältegerät nach einem der Ansprüche 1 bis 4, **dadurch gekennzeichnet, dass** das Scharnierteil (28) des Adapters (19) in Richtung der Achse (11) elastisch auslenkbar ist.

6. Kältegerät nach einem der Ansprüche 1 bis 5, **dadurch gekennzeichnet, dass** der Adapter (19) eine Nut (23) aufweist, die auf eine an der Innenwand (13) geformte Rippe (18) aufsteckbar ist.

7. Kältegerät nach Anspruch 6, **dadurch gekennzeichnet, dass** der Adapter (19) auf die Rippe (18) in deren Längsrichtung geführt aufsteckbar ist.

8. Kältegerät nach Anspruch 7, **dadurch gekennzeichnet, dass** der Adapter (19) einen in eine Aussparung der Innenwand (13) einrastbaren Vorsprung (25) aufweist.

9. Kältegerät nach einem der Ansprüche 6 bis 8, **dadurch gekennzeichnet, dass** der Adapter (19) eine über die Oberseite der Rippe (18) aufragende Anschlagfläche aufweist.

10. Kältegerät nach Anspruch 9, **dadurch gekennzeichnet, dass** die Anschlagfläche den Boden einer zur Rückwand des Korpus (1) hin offenen Aussparung (36) bildet.

11. Kältegerät nach einem der Ansprüche 6 bis 10, **dadurch gekennzeichnet, dass** der Adapter (19) eine über eine Unterseite der Rippe (18) nach unten vorspringende Anschlagfläche (35) aufweist.

12. Kältegerät nach Anspruch 11, **dadurch gekennzeichnet, dass** die Anschlagfläche (35) zur Tür (2) hin abschüssig ist.

13. Kältegerät nach Anspruch 11 oder 12, soweit auf Anspruch 8 rückbezogen, **dadurch gekennzeichnet, dass** die Anschlagfläche (35) Teil eines Verbindungsabschnitts (22) zwischen der Nut (23) und dem einrastbaren Vorsprung (25) ist.

14. Kältegerät nach einem der Ansprüche 1 bis 13, **dadurch gekennzeichnet, dass** der Adapter (19) eine Rastnase (31) aufweist, die in der geschlossenen Stellung der Klappe (7) in eine nach unten offene Rastaussparung (33) der Klappe (7) eingreift.

## Claims

1. Refrigeration appliance, in particular a household refrigeration appliance, having a carcass (1) and a door (2), which delimit a storage container (3), and having a flap (7), wherein at least one compartment (4) of the storage container (3) can be closed on the door side by means of the flap (7) pivotable about a horizontal axis (11), wherein with the flap (7) in its closed position, the axis (11) runs between the door (2) and a front surface (38) of the flap (7) facing the door (2) or along the front surface (38) of the flap (7), **characterised by** an adapter (19), wherein the axis (11) is defined by two interengaged hinge parts (28, 37), of which in each case one (37) is formed on the flap (7) and the other (28) on the adapter (19) attached to an internal wall (13) of the storage container (3).

2. Refrigeration appliance according to claim 1, **characterised in that** the freedom of pivoting movement of the flap (7) amounts to at least 180°.

3. Refrigeration appliance according to claim 1 or 2, **characterised in that** with the flap (7) in an open stop position, at least one abaxial area (12) of the front surface contacts a stop (7, 8).

4. Refrigeration appliance according to claim 3, **characterised in that** the stop (7, 8) is formed by a front wall (7, 8) delimiting a second compartment (4) of the storage container (3).

5. Refrigeration appliance according to one of claims 1 to 4, **characterised in that** the hinge part (28) of the adapter (19) is elastically deflectable in the direction of the axis (11).

6. Refrigeration appliance according to one of claims 1 to 5, **characterised in that** the adapter (19) has a groove (23), which can be mounted on a rib (18), formed on the internal wall (13).

7. Refrigeration appliance according to claim 6, **characterised in that** the adapter (19) can be mounted, guided in its longitudinal direction, on the rib (18).

8. Refrigeration appliance according to claim 7, **characterised in that** the adapter (19) has a projection (25) which can be snapped into a recess of the internal wall (13).

9. Refrigeration appliance according to one of claims 6 to 8, **characterised in that** the adapter (19) has a stop surface projecting over the upper side of the rib (18).

10. Refrigeration appliance according to claim 9, **characterised in that** the stop surface forms the floor of a recess (36) open towards the rear wall of the carcass (1).

11. Refrigeration appliance according to one of claims 6 to 10, **characterised in that** the adapter (19) has a stop surface (35) projecting downwards over an underside of the rib (18).

12. Refrigeration appliance according to claim 11, **characterised in that** the stop surface (35) is inclined towards the door (2).

13. Refrigeration appliance according to claim 11 or 12, and related to claim 8, **characterised in that** the stop surface (35) is part of a connecting section (22) between the groove (23) and the snap-on projection (25).

14. Refrigeration appliance according to one of claims 1 to 13, **characterised in that** the adapter (19) has a catch (31), which, with the flap (7) in its closed position, engages in a latching recess (33) of the flap (7) which is open downwards.

## Revendications

1. Appareil frigorifique, en particulier appareil frigorifique ménager, comportant une carcasse (1) et une porte (2) qui délimitent une chambre de stockage (3), et comportant un abattant (7), au moins un compartiment (4) de la chambre de stockage (3) pouvant être fermé, du côté de la porte, par un abattant (7) pivotant autour d'un axe horizontal (11), en position fermée de l'abattant (7), l'axe (11) passant entre la porte (2) et une surface avant (38) de l'abattant (7) tournée vers la porte (2) ou longeant la surface avant (38) de l'abattant (7), **caractérisé par** un adaptateur (19), l'axe (11) étant déterminé par deux parties de charnière (28, 37) qui s'engagent l'une dans l'autre et dont respectivement l'une (37) est formée sur l'abattant (7) et l'autre (28) sur un adaptateur (19) fixé sur une paroi intérieure (13) de la chambre de stockage (3).

2. Appareil frigorifique selon la revendication 1, **caractérisé en ce que** la liberté du mouvement de pivotement de l'abattant (7) est d'au moins 180°.

3. Appareil frigorifique selon la revendication 1 ou 2, **caractérisé en ce que**, dans une position de butée ouverte de l'abattant (7), au moins une zone (12) de la surface avant distante de l'axe est en contact avec une butée (7, 8).

4. Appareil frigorifique selon la revendication 3, **caractérisé en ce que** la butée (7, 8) est formée par une paroi avant (7, 8) qui délimite un deuxième compartiment (4) de la chambre de stockage (3).

5. Appareil frigorifique selon l'une des revendications 1 à 4, **caractérisé en ce que** l'axe (11) la partie de charnière (28) de l'adaptateur (19) peut être déviée élastiquement en direction de l'axe (11).

6. Appareil frigorifique selon l'une des revendications 1 à 5, **caractérisé en ce que** l'adaptateur (19) comporte une rainure (23) qui peut être emboîtée sur une nervure (18) formée sur la paroi intérieure (13).

7. Appareil frigorifique selon la revendication 6, **caractérisé en ce que** l'adaptateur (19) peut être emboîté sur la nervure (18) de manière guidée dans le sens longitudinal de celle-ci.

8. Appareil frigorifique selon la revendication 7, **caractérisé en ce que** l'adaptateur (19) comporte une saillie (25) qui peut s'enclencher dans un évidement de la paroi intérieure (13).

9. Appareil frigorifique selon l'une des revendications 6 à 8, **caractérisé en ce que** l'adaptateur (19) comporte une surface de butée qui fait saillie par rapport à la face supérieure de la nervure (18).

10. Appareil frigorifique selon la revendication 9, **caractérisé en ce que** la surface de butée forme le fond d'un évidement (36) ouvert en direction de la paroi arrière de la carcasse (1).

11. Appareil frigorifique selon l'une des revendications 6 à 10, **caractérisé en ce que** l'adaptateur (19) comporte une surface de butée (35) qui fait saillie vers le bas par rapport à une face inférieure de la nervure (18).

12. Appareil frigorifique selon la revendication 11, **caractérisé en ce que** la surface de butée (35) est en pente en direction de la porte (2).

13. Appareil frigorifique selon la revendication 11 ou 12, dans la mesure où elles se rapportent à la revendication 8, **caractérisé en ce que** la surface de butée (35) fait partie d'une partie de liaison (22) entre la rainure (23) et la saillie enclenchable (25).

14. Appareil frigorifique selon l'une des revendications 1 à 13, **caractérisé en ce que** l'adaptateur (19) comporte un ergot d'enclenchement (31) qui, dans la position fermée de l'abattant (7), s'engage dans un évidement d'enclenchement (33) de l'abattant (7) ouvert vers le bas.
